Europäisches Patentamt

(19) European Patent Office

Office européen des brevets

(11) Publication number: **0 103 360**
**B1**

(12) **EUROPEAN PATENT SPECIFICATION**

(45) Date of publication of patent specification: **20.04.88**

(21) Application number: **83303558.7**

(22) Date of filing: **21.06.83**

(51) Int. Cl.⁴: **G 01 L 1/14,** G 01 G 7/06

(54) **Capacitive load cell.**

(30) Priority: **22.06.82 GB 8217987**

(43) Date of publication of application:
**21.03.84 Bulletin 84/12**

(45) Publication of the grant of the patent:
**20.04.88 Bulletin 88/16**

(84) Designated Contracting States:
**DE FR GB**

(56) References cited:
**EP-A-0 017 581**
**EP-A-0 033 705**
**GB-A-1 088 873**

(73) Proprietor: **Wolfendale, Peter Caleb Frederick**
**33 Pound Hill Great Brickhill**
**Milton Keynes, Bucks. MK17 9AS (GB)**

(72) Inventor: **Wolfendale, Peter Caleb Frederick**
**33 Pound Hill Great Brickhill**
**Milton Keynes, Bucks. MK17 9AS (GB)**

(74) Representative: **Cole, Paul Gilbert et al**
**Hughes Clark Andrews & Byrne 63 Lincoln's Inn**
**Fields**
**London WC2A 3JU (GB)**

Courier Press, Leamington Spa, England.

# Description

This invention relates to a load cell or transducer which is a device for deriving from a force or weight an electrical signal characteristic of the magnitude thereof which can be used to measure or control the said force or weight.

It is well known in the art that a spring system can be made which has a deflection proportional to the force applied. A number of transducers have been made which will measure force by measuring the deflection of a suitable spring. In the present invention it is proposed to use a capacitative displacement transducer as the means of deriving an electrical signal from the spring deflection and hence measure the force applied to the spring.

European Patent Specification No. 0017581 describes a load measuring transducer comprising a deformable frame structure defined by a first inflexible member that is static and a second inflexible member that moves in response to a load being measured and a pair of arms spanning the space between the fixed and moving members and articulated thereto by resilient articulation means, said members, arms and articulation means being formed in one piece defining a parallelogram linkage that deforms in response to the load applied to the moving member; a capacitative transducer mounted on said members; and a measuring circuit being operative to provide an output signal denoting the magnitude of the applied load. In the aforesaid European specification the output obtained suffers from non-linearity due to edge effects and it is an object of this invention to overcome this problem and provide a transducer having a more linear response.

The invention is characterised in that the capacitative transducer comprises a first cylindrical electrode attached to one member, second and third electrodes attached to the other member and disposed in fixed relation to one another, all of said cylindrical electrodes being in the same dielectric medium and being generally coaxial with and spaced from one another, said second and third cylindrical electrodes being electrodes of a pair of capacitors that by relative axial movement of the cylindrical electrodes either vary differentially or with one fixed and one variable capacitor, the ratio of said capacitors being a measure of the relative deflection of said second member and in that said measuring circuit is a differential or ratio measuring circuit connected to said first and second capacitors of said capacitative transducer.

The use of capacitative displacement transducers enables accurate measurements to be made at small deflection, enables relatively stiff resilient elements machined out of solid metal to be used which have high resonant frequencies and so short response times, and gives a reliable response of high sensitivity relatively free from drift. The use of cylindrical electrodes overcomes the problem of non-linearity due to edge effect of the electrode.

The ratio measuring circuit may comprise a temperature sensitive resistance operative to compensate for temperature variation in the spring rate of the resilient member.

An embodiment of the invention will now be described by way of example only with reference to the accompanying drawings in which:

Figure 1 is a view of an embodiment of a load measuring transducer according to the invention;

Figure 2 is a block diagram of a capacitance ratio measurement circuit for use in association with the transducer of Figure 1.

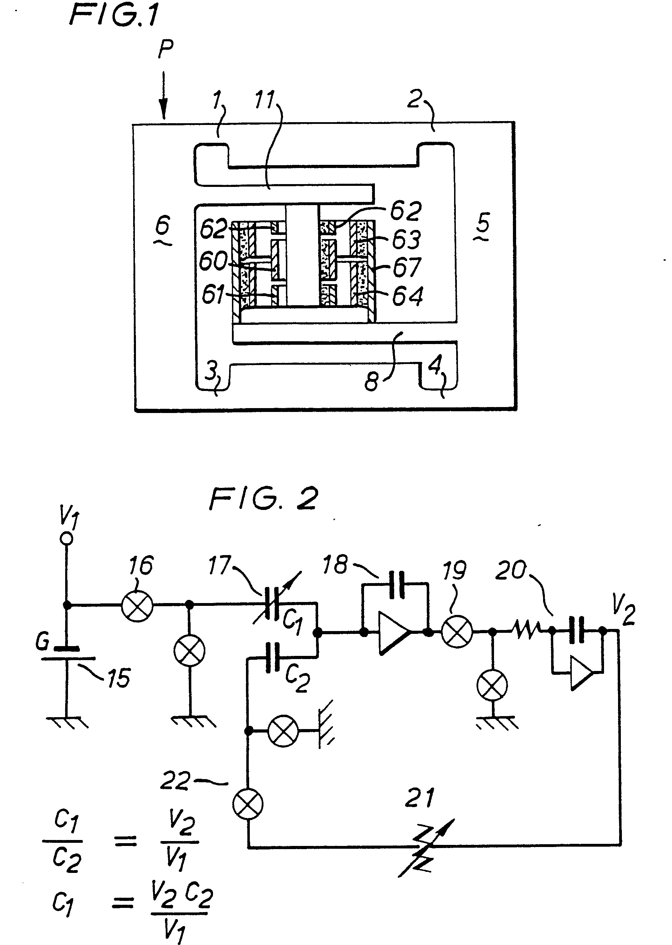

Figure 1 shows a piece of suitable solid material machined to define an inflexible member 5 that is static, an inflexible member 6 that moves in response to a load P being measured and a pair of arms linking the members 5, 6 at thinner regions 1, 2, 3 and 4 to define a rectangular frame structure that deforms into a parallelogram under load. If the element 5 is firmly bolted to a base and the load P is applied to member 6, then the member 6 will move until the restoring force due to the spring hinges 1 to 4 equals the applied force. The deflection of the member 6 will then be a measure of the applied load P.

In order that the deflection can be measured two capacitors are introduced into the spring system. Arm 8 is an extension piece attached to member 5 and carries two cylindrical electrodes 63 and 64. Arm 11 is an extension of member 6 and firmly attached to arm 11 is an electrode 60.

Electrode 60 is cylindrical and is carried on the moving arm 11 of the spring system. The moving arm 11 also carries guard rings 61 and 62 at either end of the electrode 60 which are normally held at earth potential. This cylindrical electrode assembly is carried on the moving arm 11 so that it moves freely and is located inside a fixed electrode consisting of the electrodes 63 and 64 that are energised and that are equally spaced above and below electrode 60 and constitute therewith a differential capacitor. In an alternative construction (not illustrated) electrode 63 could have its entire surface adjacent electrode 60, so that the capacitance between electrodes 60 and 63 is constant for small movements of electrode 60. Electrode 64 could overlap the edge of the electrode 60 so that the capacitance between electrodes 60 and 64 changed linearly with axial movement of electrode 60. Guard electrodes could be provided adjacent to electrodes 63 and 64 which again could serve to minimise the edge effects due to the limited length. These could be used to anchor the fixed part of the spring system to its arm 8. A further possibility is to make both the inner and the outer electrodes fixed and to interpose a moving earthed screen between one of the two capacitors, said screen being attached to the movable member 6. In that case the member 8 would support outer electrodes 63 and 64 as before and also an inner electrode corresponding to the electrode 60 but extending the full length of the electrodes 63, 64. The moving member 11 would then carry an earthed screen interposed between the inner electrode and the electrode 63.

Thereby there would be provided a fixed reference capacitor constituted by the inner electrode and electrode 64 and a variable capacitor constituted by the inner electrode, the electrode 63 and the earthed screen.

It is apparent that when a load or force P is applied to member 6, then the deflection which occurs will alter the axial position of electrode 60 relative to electrodes 63 and 64. If therefore the ratio between capacitance $C_1$ which is that formed by electrodes 60 and 63 and $C_2$ which is that formed by electrodes 60 and 64 is measured, then this will be an indication of the deflection of member 6 and hence of the load P which is causing that deflection.

One of the problems with such a design is that the deflection of the spring is dependent on the modulus of elasticity of spring materials. This is generally temperature dependent, so that the spring rate changes with temperature. There are a number of methods of compensating for this change. One method is to measure the temperature and calculate the change in rate and make a correction to the measured deflection. A second method is to incorporate a temperature sensing element in the spring and use this to modify the output of the ratio measuring circuit. This second method will be described in Figure 2 which is a block diagram of a typical system for converting capacitance ratio $C_1/C_2$ into a voltage ratio $V_2/V_1$. Element 15 is a source of DC voltage. This is chopped by a pair of switches 16 to produce a square wave which is applied to a variable capacitor 17, so that an AC current flows into the summing junction as a charge amplifier 18. The output of the charge amplifier is applied to a pair of switches 19 which are driven synchronously with switches 16 so that the original square wave is demodified and the resultant DC applied to an integrator 20. The output of the integrator is applied via a temperature dependent attenuator 21 to a third set of switches 22. These switches are also driven synchronously with switches 16 and 19 so that the DC voltage $(V_2)$ at the output of integrator 20 is chopped in the same frequency and phase as the DC voltage $(V_1)$ applied to $C_1$. There are now two currents flowing into the summing junction of the charge amplifier 18. One current is controlled by the amplitude of $V_1$ and the impedance of $C_1$ and the other current is controlled by the amplitude of $V_2$ and the impedance of $C_2$. When these two currents are equal and opposite there will be zero charge applied to integrator 20 and the ratio of $V_2$ to $V_1$ will be a measure of the ratio of $C_1$ to $C_2$. If there is a temperature change in the spring material then a resistor which varies with temperature can with advantage be incorporated in the structure of the spring material. In Figure 1 such a resistor might typically be attached to element 5. It might for example be a thin film resistor mounted on a plastic backing and stuck to the surface of element 5. This temperature dependent resistance element can then be made to form part of an attenuator 21 in Figure 2, so that as a temperature change occurs the slope of a line defining the ratio between the output $V_2$ from integrator 20 and the voltage at the input to charge amplifier 18 is adjusted to compensate for the change in slope of the modulus of elasticity of the spring element in the force transducer, the two such slopes remaining the same and the ratio of $V_2$ to $V_1$ to produce a nul output for a given load remaining unaltered as the temperature changes.

**Claims**

1. A load measuring transducer comprising: a deformable frame structure defined by a first inflexible member (5) that is static and a second inflexible member (6) that moves in response to a load (P) being measured and a pair of arms spanning the space between the fixed and moving members (5, 6) and articulated thereto by resilient articulation means (1—4), said members (5, 6), arms and articulation means (1—4) being formed in one piece, defining a parallelogram linkage that deforms in response to the load applied to the moving member (6), a capacitative transducer mounted on said members and a measuring circuit being operative to provide an output signal denoting the magnitude of the applied load (P); characterised in that the capacitative transducer comprises a first cylindrical electrode (60) attached to one member (6), second and third cylindrical electrodes (63, 64) attached to the other member (5) and disposed in fixed relation to one another, all of said cylindrical electrodes (60, 63, 64) being in the same dielectric medium and being generally coaxial with and spaced from one another, said second and third cylindrical electrodes being electrodes of a pair of capacitors ($C_1$, $C_2$) that by relative axial movement of the cylindrical electrodes either vary differentially or with one fixed and one variable capacitor, the ratio of said capacitors ($C_1$, $C_2$) being a measure of the relative deflection of said second member (6) and in that said measuring circuit is a differential or ratio measuring circuit connected to said first and second capacitors ($C_1$, $C_2$) of said capacitative transducer.

2. The transducer of claim 1 wherein said second and third cylindrical electrodes (63, 64) have substantially the same diameter and are axially spaced from one another.

3. The transducer of Claim 1 or 2 wherein said first cylindrical electrode (60) is attached to the moving member (6) and said second and third cylindrical electrodes (63, 64) are attached to said static member (5).

4. The transducer of Claim 1, 2 or 3 wherein said first electrode (60) has a smaller diameter than, and is located within, said second and third electrodes (63, 64).

5. The transducer of any preceding claim including a pair of guard rings (61, 62) disposed adjacent to and in fixed space relationship relative to the opposing ends respectively of said first cylindrical electrode (60).

6. The transducer of any preceding Claim wherein one capacitor ($C_1$) is formed by said first electrode (60) and said second electrode (63) and the other capacitor ($C_2$) is formed by said first electrode (60) and said third electrode (64).

7. The transducer of Claims 1, 2, 3 or 4 wherein one capacitor ($C_1$) is formed by said second electrode (63) and a fourth electrode, the other capacitor ($C_2$) is formed by said third electrode (64) and said fourth electrode, said fourth electrode being disposed in fixed coaxial spaced relation to said second and third electrodes (63, 64) and wherein the first electrode (60) acts as a screen interposed between the second electrode (63) and the fourth electrode.

8. The load-measuring transducer of any one of the preceding Claims wherein said differential or ratio measuring circuit includes a temperature sensitive resistance (21) operative to compensate for temperature variation in the spring rate of the resilient articulation means (1—4).

**Patentansprüche**

1. Kraftmeßwandler mit einem verformbaren Rahmen aus einem ersten starren statischen Glied (5) und einem zweiten starren Glied (6), das sich als Reaktion auf eine zu messende Kraft (P) bewegt, und ein Paar von Armen, welches den Raum zwischen dem fixierten und dem beweglichen Glied (5, 6) überbrückt und an diesen mit elastischen Mitteln (1—4) angelenkt ist, wobei die Glieder (5, 6), die Arme und die Mittel (1—4) aus einem Stück geformt sind und ein Parallelogramm bilden, welches sich als Reaktion auf die auf das bewegliche Glied (6) gerichtete Kraft deformiert, wobei ein kapazitiver Wandler an den Gliedern angeordnet und eine Meßschaltung vorgesehen ist, welche ein der Größe der Kraft P entsprechendes Ausgangssignal abgibt, dadurch gekennzeichnet, daß der kapazitive Wandler eine erste, an Glied (6) angeordnete zylindrische Electrode (60), eine zweite und eine dritte, am anderen Glied (5) in fixierter Lage zueinander angeordnete Elektrode (63, 64) aufweist, wobei alle zylindrischen Elektroden (60, 63, 64) aus demselben dielektrischen Material gebildet und im wesentlichen koaxial mit- und auf Abstand zueinander angeordnet sind, wobei die zweite und dritte zylindrische Elektrode Elektroden eines Paars von Kondensatoren ($C_1$, $C_2$) sind, welche durch eine relative axiale Bewegung der zylindrischen Elektroden differentiell variieren oder aus einem fixierten und einem variablen Kondensator bestehen, wobei das Verhältnis der beiden Kondensatoren ($C_1$, $C_2$) ein Maß für die relative Biegung des zweiten Gliedes (6) ist und dadurch, daß die Meßschaltung als Differentialschaltung oder als Verhältnis messende Schaltung ausgebildet ist, welche mit dem ersten und zweiten Kondensator ($C_1$, $C_2$) des kapazitiven Wandlers verbunden ist.

2. Wandler nach Anspruch 1, dadurch gekennzeichnet, daß die zweite und dritte zylindrische Elektrode (63, 64) etwa denselben Durchmesser aufweisen und axial auf Abstand zueinander angeordnet sind.

3. Wandler nach Anspruch 1 oder 2, dadurch gekennzeichnet, daß die erste zylindrische Elektrode (60) am beweglichen Glied (6) und die zweite und dritte zylindrische Elektrode (63, 64) am statischen Glied (5) angeordnet sind.

4. Wandler nach Anspruch 1 oder einem der folgenden, dadurch gekennzeichnet, daß die erste Elektrode (60) einem kleineren Durchmesser als die zweite und dritte Elektrode (63, 64) aufweist und innerhalb dieser beiden angeordnet ist.

5. Wandler nach Anspruch 1 oder einen der folgenden, dadurch gekennzeichnet, daß ein Paar von Schutzringen (61, 62) benachbart zur ersten zylindrischen Elektrode (60) und in fixierter Lage auf Abstand relativ zu den gegenüberliegenden Enden der Elektrode (60) angeordnet ist.

6. Wandler nach Anspruch 1 oder einem der folgenden, dadurch gekennzeichnet, daß der Kondensator ($C_1$) aus der ersten Elektrode (60) und der zweiten Elektrode (63) und der andere Kondensator ($C_2$) aus der ersten Elektrode (60) und der dritten Elektrode (64) gebildet ist.

7. Wandler nach Anspruch 1, 2, 3 oder 4, dadurch gekennzeichnet, daß der Kondensator ($C_1$) aus der zweiten Elektrode (63) und einer vierten Elektrode, der andere Kondensator ($C_2$) aus der dritten Elektrode (64) und der vierten Elektrode gebildet ist, wobei die vierte Elektrode in einer fixierten Lage, koaxial auf Abstand zur zweiten und dritten Elektrode (63, 64) angeordnet ist, und wobei die erste Elektrode (60) als zwischengelagerter Schirm zwischen der zweiten Elektrode (63) und der vierten Elektrode dient.

8. Wandler nach Anspruch 1 oder der folgenden, dadurch gekennzeichnet, daß die Differentialschaltung oder Verhältnis messende Schaltung einen temperaturempfindlichen Widerstand (21) aufweist, welcher zur Kompensation von Temperaturunterschieden in der Federsteifigkeit der elastischen Mittel (1—4) geeignet ist.

**Revendications**

1. Transducteur de mesure de charge comprenant: une structure de châssis déformable définie par un premier élément rigide (5) constituant un élément statique et un second élément rigide (6) se déplaçant en réponse à une charge (P) à mesurer, et une paire de bras traversant l'espace compris entre les éléments fixe et mobile (5, 6) et s'articulant sur ceux-ci par des moyens d'articulation élastiques (1 à 4), ces éléments (5, 6), les bras et les moyens d'articulation (1 à 4) étant formés d'une seule pièce pour définir une liaison en forme de parallélogramme se déformant en réponse à la charge appliquée à l'élément mobile (6), un transducteur capacitif monté sur les éléments, et un circuit de mesure fonctionnant pour produire un signal de sortie indiquant l'amplitude de la charge appliquée (P); transducteur caractérisé en ce que le transducteur capacitif comprend une première électrode cylindrique (60) fixée à un élément (6), une seconde et troisième électrode cylindrique (63, 64) fixées à'autre élément (5) et disposées dans une relation fixe l'une par rapport à l'autre, toutes ces électrodes cylindriques (60, 63, 64) étant réalisées dans le même matériau diélectique et se trouvant généralement espacées coaxialement les unes par rapport aux autres, les seconde et troisième électrode cylindrique constituant les électrodes d'une paire de condensateurs ($C_1$, $C_2$) qui, par un mouvement axial relatif des électrodes cylindriques, varient soit de façon différentielle soit de façon que l'un des condensateurs soit fixe et l'autre variable, le rapport de ces condensateurs ($C_1$, $C_2$) constituant une mesure de la déviation relative du second élément (6), et en ce que le circuit de mesure est un circuit différentiel ou de mesure de rapport se branchant au premier et second condensateur ($C_1$, $C_2$) du transducteur capacitif.

2. Transducteur selon la revendication 1, caractérisé en ce la seconde et troisième électrode cylindrique (63, 64) présentent exactement le même diamètre et sont espacées axialement l'une de l'autre.

3. Transducteur selon l'une quelconque des revendications 1 et 2, caractérisé en ce que la première électrode cylindrique (60) est fixée à l'élément mobile (6) et en ce que la seconde et troisième électrode cylindrique (53, 54) sont fixées à l'élément statique (5).

4. Transducteur selon l'une quelconque des revendications 1 à 3, caractérisé en ce que la première électrode (60) présénte un plus petit diamètre que la seconde et troisième électrode (63, 64), et se loge à l'intérieur de celles-ci.

5. Transducteur selon l'une quelconque des revendications précédentes, caractérisé en ce qu'il comprend une paire d'anneaux de garde (61, 62) disposée au voisinage et dans une relation d'espacement fixe par rapport aux extrémités respectives opposées de la première électrode cylindrique (60).

6. Transducteur selon l'une quelconque des revendications précédentes, caractérisé en ce qu'un condensateur ($C_1$) est formé par la première électrode (60) et la seconde électrode (63), et en ce que l'autre condensateur ($C_2$) est formée par la première électrode (60) et la troisième électrode (64).

7. Transducteur selon l'une quelconque des revendications 1 à 4, caractérisé en ce qu'un condensateur ($C_1$) est formé par la seconde électrode (63) et une quatrième électrode, en ce que l'autre condensateur ($C_2$) est formé par la troisième électrode (64) et la quatrième électrode, cette quatrième électrode étant disposée dans une relation d'espacement coaxial fixe par rapport à la seconde et troisième électrode (63, 64), et en ce que la première électrode (60) fonctionne en écran interposé entre la seconde électrode (63) et la quatrième électrode.

8. Transducteur de mesure de charge selon l'une quelconque des revendications précédentes, caractérisé en ce que le circuit différentiel ou de mesure de rapport comprend une résistance sensible à la température (21) servant à compenser la variation de température du taux d'élasticité de ressort des moyens d'articulation élastiques (1 à 4).

## FIG.1

## FIG. 2

$$\frac{C_1}{C_2} = \frac{V_2}{V_1}$$

$$C_1 = \frac{V_2 C_2}{V_1}$$

1